(19) Europäisches Patentamt

European Patent Office

Office européen des brevets

(11) Veröffentlichungsnummer: **0 348 592**
**A2**

(12) **EUROPÄISCHE PATENTANMELDUNG**

(21) Anmeldenummer: 89102200.6

(22) Anmeldetag: 09.02.89

(51) Int. Cl.4 **G01G 13/06 , G01G 13/24**

(30) Priorität: 01.07.88 DE 3822208

(43) Veröffentlichungstag der Anmeldung:
03.01.90 Patentblatt 90/01

(84) Benannte Vertragsstaaten:
**CH DE ES FR GB IT LI NL**

(71) Anmelder: **Greif-Werk Maschinenfabrik GmbH**
**Kronsforder Landstrasse 177**
**D-2400 Lübeck(DE)**

(72) Erfinder: **Staack, Jürgen**
**Kaltenhöfer Strasse 45**
**D-2407 Bad Schwartau(DE)**
Erfinder: **Thiele, Jürgen, Dipl.-Ing.**
**Claudiusring 38b**
**D-2400 Lübeck(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) Verfahren und Abfüllwaage zum Abwiegen von schüttfähigen Stoffen.

(57) Mit einem Verfahren zum Abwiegen von schüttfähigen Stoffen aus einem Speicher und einer selbsttätigen Abfüllwaage mit einer Dosiereinrichtung und mit einem mit einer Wieggeeinrichtung versehenen Lastgefäß soll eine Lösung geschaffen werden, welche mit möglichst einfachen Mitteln die Abfüllleistung derartiger Abfüllwaagen deutlich verbessern kann.

Dies wird dadurch erreicht, daß das Schüttgut durch die Dosiereinrichtung und eine zusätzlich unterhalb dieser angeordnete Vordosiereinrichtung zunächst als Grobstrom und anschließend zur Feindosierung als Feinstrom in das Lastgefäß geführt wird, daß nach Erreichen der gewünschten Schüttgutmenge im Lastgefäß die Austrittsöffnung der Vordosiereinrichtung geschlossen und gleichzeitig weiterhin ein Feinstom aus der Dosiereinrichtung in die Vordosiereinrichtung geleitet wird, und daß nach der Entleerung des Lastgefäßes die Dosier- und die Vordosiereinrichtung wieder vollständig geöffnet werden.

Fig.1

## Verfahren und Abfüllwaage zum Abwiegen von schüttfähigen Stoffen

Die Erfindung betrifft ein Verfahren zum Abwiegen von schüttfähigen Stoffen aus einem Speicher und eine selbsttätige Abfüllwaage für schüttfähige Stoffe mit einer Dosiereinrichtung mit querschnittlich veränderbarer Austrittsöffnung zur Grob- und Feinstromzuteilung und mit einem mit einer Wiegeeinrichtung versehenen Lastgefäß mit verschließbarem Austritt.

Derartige Abfüllwaagen dienen zur portionsweisen Abfüllung von in einem Speicher, wie einem Silo od. dgl., bevorrateten, schüttfähigen Stoffen. Wirtschaftlich arbeiten solche Waagen nur, wenn eine möglichst große Anzahl von Abfüllungen in einer bestimmten Zeiteinheit zu erreichen ist.

Eine gattungsgemäße Abfüllwaage ist aus der DE-PS 22 02 591 bekannt. Bei dieser Abfüllwaage und dem mit dieser Waage durchgeführten Verfahren wird versucht, das Schüttgut möglichst lange als Grobstrom in das Lastgefäß zu leiten und erst kurz vor Erreichen der gewünschten Abfüllmenge die Zuteilung des Schüttgutes auf Feinstrom umzuschalten. Dies wird durch einen aufwendigen elektronischen Schaltmechanismus erreicht.

Es hat sich aber herausgestellt, daß auch mit dieser Lösung noch keine vollständig befriedigenden Ergebnisse erzielt werden können, die Anzahl an pro Zeiteinheit möglichen Abfüllungen ist noch nicht ausreichend und läßt sich auch durch eine weitere Optimierung des Schaltmechanismus nur geringfügig steigern.

Besonders nachteilig bei bekannten Abfüllwaagen und Verfahren zum Abwiegen ist weiterhin, daß durch das Schließen der Dosiereinrichtung während des Entleervorganges des Lastgefäßes das Schüttgut sich nicht mehr in Bewegung befindet, sondern zum Stillstand kommt, d.h. das Abwiegeverfahren stellt einen diskontinuierlichen Prozeß dar. Dies kann vor allem bei Schüttgütern mit unterschiedlichen Teilchengrößen und Oberflächengestaltungen, insbesondere bei granulatförmigen Gütern, dazu führen, daß es nach Wiederöffnen der Dosiereinrichtung bei einem neuen Abfüllvorgang zu Verstopfungen kommt, welche den Abfüllvorgang noch zusätzlich verzögern und somit die Leistung der Abfüllwaage verschlechtern.

Demgegenüber besteht die Aufgabe der Erfindung darin, eine Lösung zu schaffen, welche mit möglichst einfachen Mitteln die Abfülleistung derartiger Abfüllwaagen, d.h. Anzahl an pro Zeiteinheit möglichen Abfüllungen, deutlich verbessern kann.

Diese Aufgabe wird mit einem Verfahren der eingangs bezeichneten Art erfindungsgemäß dadurch gelöst, daß das Schüttgut zunächst bei vollständig geöffneten Austrittsöffnungen einer Dosiereinrichtung und einer unterhalb dieser angeordneten Vordosiereinrichtung als Grobstrom in ein Lastgefäß mit Wiegeeinrichtung geführt wird, daß anschließend zur Feindosierung bei geöffneter Austrittsöffnung der Vordosiereinrichtung und nur geringfügig geöffneter Austrittsöffnung der Dosiereinrichtung das Schüttgut als Feinstrom in das Lastgefäß geführt wird, daß nach Erreichen der gewünschten Schüttgutmenge im Lastgefäß die Austrittsöffnung der Vordosiereinrichtung geschlossen und gleichzeitig weiterhin ein Feinstrom aus der Dosiereinrichtung in die Vordosiereinrichtung geleitet wird, und daß nach der Entleerung des Lastgefäßes die Austrittsöffnungen der Dosiereinrichtung und der Vordosiereinrichtung wieder vollständig geöffnet werden.

Mit diesem Verfahren kann auf einfache Weise die Leistung einer Abfüllwaage wesentlich verbessert werden. Dabei wird der übliche diskontinuierliche Abfüllprozeß durch die Zwischenschaltung einer Vordosiereinrichtung in einen quasi kontinuierlichen Vorgang umgewandelt, in dem kontinuierlich Schüttgut aus dem Speicher in unterschiedlicher Menge fließt. Dabei wird das Schüttgut zunächst in üblicher Weise als Grobstrom durch die vollständig geöffnete Dosier-und Vordosiereinrichtung in das Lastgefäß geführt und zur Feindosierung entsprechend anschließend der Querschnitt der Austrittsöffnung der Dosiereinrichtung verringert, so daß nur noch ein Feinstrom in das Lastgefäß eintreten kann. Sobald das Lastgefäß mit der gewünschten Menge an Schüttgut gefüllt ist, schließt die Austrittsöffnung der Vordosiereinrichtung, wobei gleichzeitig weiterhin ein Feinstrom durch die Dosiereinrichtung in die geschlossene Vordosiereinrichtung fließt. Nach der Entleerung des Lastgefäßes öffnen dann beide Austrittsöffnungen der Dosiereinrichtung und der Vordosiereinrichtung gleichzeitig, so daß einerseits das Schüttgut als Grobstrom aus dem Speicher und andererseits die während des Entleervorganges in der Vordosiereinrichtung gespeicherte Menge an Schüttgut in das Lastgefäß eintritt.

Auf diese Weise wird eine erhebliche Leistungssteigerung der Abfüllwaage erreicht, wozu einerseits beiträgt, daß sich das Schüttgut im Speicher jederzeit in Bewegung befindet, so daß es nicht zu Verstopfungen oder dgl. kommen kann. Andererseits tritt gegenüber herkömmlichen Verfahren keine Totzeit während der Entleerung des Lastgefäßes auf, da während dieses Zeitraumes Schüttgut in die Vordosiereinrichtung geleitet wird, welches dann zusammen mit dem Grobstrom nach dem Entleervorgang des Lastgefäßes auf einmal in das Lastgefäß geleitet wird.

Zur Lösung der eingangs gestellten Aufgabe sieht die Erfindung auch eine selbsttätige Abfüllwaage vor, bei der zwischen der Dosiereinrichtung und dem Lastgefäß eine Vordosiereinrichtung mit verschließbarer Austrittsöffnung angeordnet ist.

Durch die Zwischenschaltung einer solchen Vordosiereinrichtung kann auf einfache Weise die Leistung der Abfüllwaage wesentlich verbessert werden. In Verbindung mit dem erfindungsgemäßen Verfahren kann die so ausgebildete Abfüllwaage nämlich gegenüber bekannten diskontinuierlich betriebenen Waagen quasi kontinuierlich betrieben werden, wodurch die vorstehend näher dargelegten erheblichen Leistungssteigerungen möglich sind.

Dabei ist es zweckmäßig, wenn die Austrittsöffnung der Vordosiereinrichtung querschnittlich größer als die Austrittsöffnung der Dosiereinrichtung in vollständig geöffnetem Zustand ausgebildet ist. Durch diese Ausbildung wird weiter dazu beigetragen, daß es nicht zu Verstopfungen kommen kann.

Vorteilhaft sieht die Erfindung vor, daß die Verschlüsse der Austrittsöffnungen der Dosierund/oder der Vordosiereinrichtung als Klappenverschlüsse ausgebildet sind. Diese Ausbildung eignet sich besonders gut für schüttfähige, z.B. granulatförmige Güter, ohne daß die Erfindung auf die se Ausbildung beschränkt wäre.

Es kann auch besonders vorteilhaft sein, wenn die Verschlüsse der Austrittsöffnungen der Dosierund/oder der Vordosiereinrichtung als Doppelklappenverschlüsse ausgebildet sind. Gegenüber einfachen Klappenverschlüssen werden diese Doppelklappenverschlüsse bevorzugt dann eingesetzt, wenn eine höhere Leistung der Abfüllwaage gewünscht wird, d.h. größere Austrittsöffnungen notwendig sind.

Die Erfindung ist nachstehend anhand der Zeichnung beispielsweise näher erläutert. Diese zeigt in:

Fig. 1 bis 4 eine erfindungsgemäß ausgebildete Abfüllwaage in stark vereinfachter Darstellung in vier unterschiedlichen Verfahrensstufen und

Fig. 5 ein über der Zeit aufgetragenes Funktionsablaufdiagramm.

Eine stark vereinfacht wiedergegebene selbsttätige Abfüllwaage 1 weist ein Lastgefäß 2 mit einer in der Zeichnung nicht dargestellten Wiegeeinrichtung und einem Austrittsverschluß 3 auf, welcher über ein Gelenk 4 schwenkbar angeordnet ist. Oberhalb des Lastgefäßes 2 ist eine Vordosiereinrichtung 5 angeordnet, welche eine Austrittsöffnung 6 aufweist, die über einen verschwenkbaren Klappenverschluß 7 verschließbar ist.

Oberhalb der Vordosiereinrichtung 5 ist eine Dosiereinrichtung 8 vorgesehen, die am Austritt eines nicht näher dargestellten Speichers angeordnet ist. Die Dosiereinrichtung 8 weist eine gegenüber der Austrittsöffnung 6 der Vordosiereinrichtung 5 querschnittlich kleinere Austrittsöffnung 9 mit einem variabel verschließbarem Klappenverschluß 10 auf.

Der Verfahrensablauf der Abfüllwaage 1 ist der folgende:

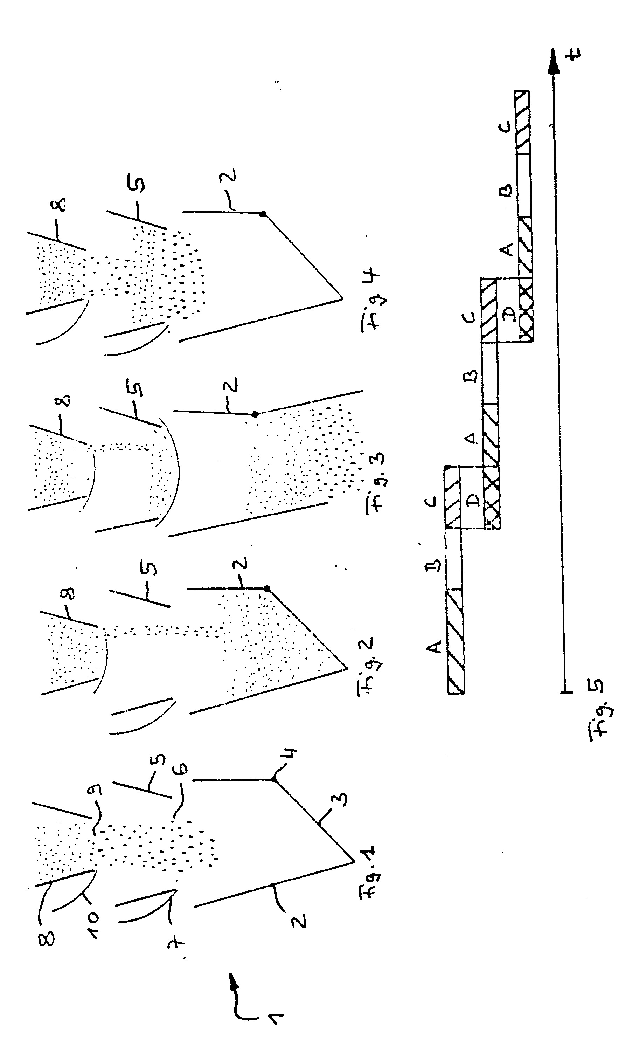

Zum portionsweisen Abwiegen eines Schüttgutes, z.B. in Granulatform, aus dem nicht dargestellten Speicher werden zunächst die Klappenverschlüsse 7,10 der Vordosiereinrichtung 5 und der Dosiereinrichtung 8 vollständig geöffnet. Dadurch tritt das Schüttgut als Grobstrom (Fig. 1) durch die Dosiereinrichtung 8 und die Vordosiereinrichtung 5 in das geschlossene Lastgefäß 2 ein.

Sobald die im Lastgefäß befindliche, über die Wiegeeinrichtung bestimmbare Menge an Schüttgut einen vorbestimmten Betrag erreicht, wird der Klappenverschluß 10 der Dosiereinrichtung 8 so weit geschlossen, daß das Schüttgut nur noch als Feinstrom (Fig. 2) aus der Dosiereinrichtung 8 austreten und durch die geöffnete Vordosiereinrichtung 5 in das Lastgefäß 2 eintreten kann. Das Schüttgut wird solange als Feinstrom in das Lastgefäß 2 eingeleitet, bis die vorbestimmte Menge an Schüttgut im Lastgefäß 2 enthalten ist.

Durch Schließen des Klappenverschlusses 7 der Vordosiereinrichtung 5 wird dann der erste Abwiegevorgang beendet. Gleichzeitig jedoch bleibt der Klappenverschluß 10 der Dosiereinrichtung 8 in der geringen Öffnungsstellung, so daß weiterhin aus der Dosiereinrichtung 8 ein Feinstrom an Schüttgut austritt und sich in der geschlossenen Vordosiereinrichtung 5 ansammelt (Fig. 3). Während dieses Vorganges wird das Lastgefäß durch Öffnen des Austrittsverschlusses 3 entleert und nach der Entleerung wieder verschlossen. Beim Entleervorgang des Lastgefäßes tritt gegenüber bekannten Verfahren also kontinuierlich eine gewisse Menge an Schüttgut aus dem Speicher aus, so daß es im Speicher nicht zu Verstopfungen kommen kann, welche dann einen neuen Abwiegevorgang behindern könnten.

Nach dem Verschließen des Lastgefäßes 2 beginnt ein neuer Abwiegevorgang (Fig. 4), wozu die Klappenverschlüsse 10 und 7 der Dosiereinrichtung 8 und der Vordosiereinrichtung 5 wiederum vollständig geöffnet werden. Dadurch wird die während des Entleervorganges des Lastgefäßes 2 in der Vordosiereinrichtung angesammelte Menge an Schüttgut auf einmal in das Lastgefäß 2 abgegeben, während gleichzeitig das aus dem Speicher austretende Schüttgut kontinuierlich als Grobstrom durch die geöffnete Dosiereinrichtung 8 und die Vordosiereinrichtung 5 in das Lastgefäß 2 einströmt. Durch diese während des Entleervorganges des Lastgefäßes 2 in der Vordosiereinrichtung 5 angesammelte Menge ergibt sich eine wesentliche Leistungssteigerung der Abfüllwaage 1, da die für den Grobstrom benötigte Zeit wesentlich verkürzt wird.

Diese Leistungssteigerung läßt sich besonders gut aus dem in Fig. 5 dargestellten Zeitdiagramm erkennen. In diesem Diagramm bedeutet A die Zeit für den Grobstrom, B die Zeit für den Feinstrom, C die Zeit für die Entleerung des Lastgefäßes und D die Zeit für die Vordosierung, die der Zeit für die Entleerung entspricht. Die Gesamtzeit für einen Wiegevorgang setzt sich aus der Summe der Einzelzeiten A, B und C zusammen. Diese Gesamtzeit ist für den ersten Wiegevorgang am größten, da im Anfahrvorgang noch ein vollständiger Grobstrom notwendig ist. Für die weiteren Wiegevorgänge jedoch ergibt sich eine deutliche Leistungssteigerung. Die Zeit für den Grobstrom A wird geringer, da während der Zeit für die Entleerung C des vorangehenden Wiegevorgangs in der Vordosiereinrichtung 5 eine Vordosierung abläuft, die mit der Zeit D bezeichnet ist und der Zeit für die Entleerung C entspricht. Da die während der Vordosierungszeit D in der Vordosiereinrichtung 5 angesammelte Menge an Schüttgut zu Beginn jedes Wiegevorganges auf einmal in das Lastgefäß abgegeben wird, verkürzt sich entspre chend die für die Grobstromzuteilung notwendige Zeit A, so daß die Gesamtzeit (A, B, C) geringer wird, also die Leistung der Abfüllwaage 1 verbessert wird.

Selbstverständlich sind die einzelnen Elemente der Abfüllwaage über elektrische Schaltmechanismen miteinander verbunden, was in der Zeichnung nicht näher dargestellt ist und worauf es hier auch nicht näher ankommt. Somit ist gewährleistet, daß alle einzelnen Verfahrensstufen ohne Unterbrechungen direkt hintereinander kontinuierlich ablaufen. Das erfindungsgemäße Verfahren kann bei entsprechend größerem schaltungstechnischen Aufwand noch dadurch verbessert werden, daß während des Entleervorganges des Lastgefäßes 2 die aus der Dosiereinrichtung 8 austretende Menge an Schüttgut, welche sich dann in der Vordosiereinrichtung 5 ansammelt noch vergrößert wird, d. h. nicht nur als Feinstrom in die Vordosiereinrichtung 5 geleitet wird.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen. So eignet sich das erfindungsgemäße Verfahren bei entsprechender Ausgestaltung der Vordosiereinrichtung und Dosiereinrichtung auch zur Schneckendosierung, Banddosierung, Vibrationsrinnendosierung oder auch für andere Arten der Dosierung.

## Ansprüche

1. Verfahren zum Abwiegen von schüttfähigen Stoffen aus einem Speicher,
dadurch gekennzeichnet,
daß das Schüttgut zunächst bei vollständig geöffneten Austrittsöffnungen einer Dosiereinrichtung und einer unterhalb dieser angeordneten Vordosiereinrichtung als Grobstrom in ein Lastgefäß mit Wiegeeinrichtung geführt wird, daß anschließend zur Feindosierung bei geöffneter Austrittsöffnung der Vordosierung und nur geringfügig geöffneter Austrittsöffnung der Dosiereinrichtung das Schüttgut als Feinstrom in das Lastgefäß geführt wird, daß nach Erreichen der gewünschten Schüttmenge im Lastgefäß die Austrittsöffnung der Vordosiereinrichtung geschlossen und gleichzeitig weiterhin ein Feinstrom aus der Dosiereinrichtung in die Vordosiereinrichtung geleitet wird, und daß nach der Entleerung des Lastgefäßes die Austrittsöffnungen der Dosiereinrichtung und der Vordosiereinrichtung wieder vollständig geöffnet werden.

2. Selbsttätige Abfüllwaage für schüttfähige Stoffe zur Durchführung des Verfahrens nach Anspruch 1 mit einer Dosiereinrichtung mit querschnittlich veränderbarer Austrittsöffnung zur Grob- und Feinstromzuteilung und mit einem mit einer Wiegeeinrichtung versehenen Lastgefäß mit verschließbarem Austritt,
dadurch gekennzeichnet,
daß zwischen der Dosiereinrichtung (8) und dem Lastgefäß (2) eine Vordosiereinrichtung (5) mit verschließbarer Austrittsöffnung (6) angeordnet ist.

3. Abfüllwaage nach Anspruch 2,
dadurch gekennzeichnet,
daß die Austrittsöffnung (6) der Vordosiereinrichtung (5) querschnittlich größer als die Austrittsöffnung (9) der Dosiereinrichtung (8) in vollständig geöffnetem Zustand ausgebildet ist.

4. Abfüllwaage nach Anspruch 2 oder 3,
dadurch gekennzeichnet,
daß die Verschlüsse der Austrittsöffnungen (9,6) der Dosier- und/oder der Vordosiereinrichtung als Klappenverschlüsse (10,7) ausgebildet sind.

5. Abfüllwaage nach Anspruch 2 oder einem der folgenden,
dadurch gekennzeichnet,
daß die Verschlüsse der Austrittsöffnungen (9,6) der Dosier- und/oder der Vordosiereinrichtung als Doppelklappenverschlüsse ausgebildet sind.

Fig. 1

Fig. 2

Fig. 3

Fig. 4

Fig. 5

EP 0 348 592 A2